# EUROPEAN PATENT APPLICATION

(11) **EP 4 550 071 A1**
(43) Date of publication of application: **07.05.2025**
(21) Application number: 24203202.7
(22) Date of filing: 27.09.2024
(51) Int. Cl.: G05B 23/02, G06F 30/20, H02H 1/00, G01R 31/00

(54) **SYSTEMS AND METHODS FOR ARC DAMAGE DETECTION**

(30) Priority: 30.10.2023 US 202318384909
(71) Applicant: Hamilton Sundstrand Corporation, Charlotte, NC 28217-4578 (US)
(72) Inventor: JOSHI, Ashutosh, Roscoe, IL (US); PAL, Debabrata, Hoffman Estates, IL (US)
(74) Representative: Dehns

(57) **Abstract**

A method of detecting electrical arc damage includes receiving input (128) indicative of electrical power as a function of time in an electrical arc (114). The method includes using the input (128) to model an amount of damage caused by the electrical arc (114), and comparing the amount of damage to a predetermined threshold. The method includes flagging a warning in response to the amount of damage exceeding a predetermined threshold. The method can include breaking a circuit to stop the electrical arc (114). Flagging the warning can include signaling to an operator to inspect a unit potentially damaged by the electrical arc (114). The method can include inspecting the unit potentially damaged by the electrical arc (114).

## Description

### BACKGROUND

### 1. Field

The present disclosure relates to arc damage mitigation, such as for use in high power electrical units in aircraft applications.

### 2. Description of Related Art

Main power generation and conversion systems aboard aircraft may have short circuits due to FOD (foreign object debris) or other effects. These short circuits can result in a large amount of energy dissipated to a power conversion assembly, resulting in thermal damage. Unless mitigated, there is a potential for fire hazard in or around the affected system. The duration for detecting such a short circuit is very short, even though the energy dissipated can be very large. Power conversion systems have cooling systems with liquid circulated through cold plates. During a short circuit event, an electrical arc can impinge near the cold plate cooling channels and well as line replaceable unit (LRU) chassis walls. Power conversion LRUs utilize a system where the high fault current is detected due to an electrical arc, and system is shut down upon detection of the high current. However, during the latency of this detection and trip, there is still time for the arc to dissipate enough energy such that the system cold plate or walls can be damaged.

The conventional techniques have been considered satisfactory for their intended purpose. However, there is an ever present need for improved systems and methods for assessing damage due to electrical arcs. This disclosure provides a solution for this need.

### SUMMARY

A method of detecting electrical arc damage includes receiving input indicative of electrical power as a function of time in an electrical arc. The method includes using the input to model an amount of damage caused by the electrical arc, and comparing the amount of damage to a predetermined threshold. The method includes flagging a warning in response to the amount of damage exceeding a predetermined threshold.

The method can include breaking a circuit to stop the electrical arc. Flagging the warning can include signaling to an operator to inspect a unit potentially damaged by the electrical arc. The method can include inspecting the unit potentially damaged by the electrical arc.

Using the input to model the amount of damage can include using a regression model based on validated configurations in a variety of operating conditions. Using the regression model can include modeling transient heat transfer resulting from the electrical arc. Using the input to model the amount of damage can include using a machine learning model. The machine learning model can include a deep neural network model.

The input indicative of electrical power as a function of time can include electrical current over time during the electrical arc. The method can include receiving input indicative of one or more geometries of a system of the electrical arc, wherein using the input to model the amount of damage can include modeling the amount of damage based on each of the one or more geometries. The method can include receiving input indicative of one or more materials of a system of the electrical arc, wherein using the input to model the amount of damage can include modeling the amount of damage based on each of the one or more materials. The input can include receiving input indicative of a cooling condition of a system of the electrical arc, wherein using the input to model the amount of damage can include modeling the amount of damage based on the cooling condition.

Using the input to model the amount of damage can include determining an estimated melt depth resulting from the electrical arc. Comparing the amount of damage to a predetermined threshold can include comparing the estimated melt depth to a known wall thickness to determine if the estimated melt depth represents a potential through hole versus the known wall thickness. The method can include indicating a safe condition after the electrical arc in response to the amount of damage not exceeding a predetermined threshold.

A system is provided for detecting electrical arc damage. The system includes a processor operatively connected to machine readable instructions configured to cause the processor to perform methods as disclosed herein.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:
Fig. 1 is a schematic view of an embodiment of a system constructed in accordance with the present disclosure, showing possible locations for an electrical arc;
Fig. 2 is a schematic view of a portion of the system of Fig. 1, showing melt depth in a housing or chassis wall;
Fig. 3 is a schematic view of a portion of the system of Fig. 1, showing melt depth in a cold plate cooling channel;
Fig. 4 is a plot of power versus time for an electrical arc;
Fig. 5 is a plot of maximum melt depth as a function of energy pulse duration for an electrical arc;
Fig. 6 is a schematic view of a portion of the system of Fig. 1, showing modeling inputs and output for a regression model; and
Fig. 7 is a schematic view of a portion of the system of Fig. 1, showing modeling inputs and output for a machine learning model.

### DETAILED DESCRIPTION OF THE PREFERRED EMBODIMENTS

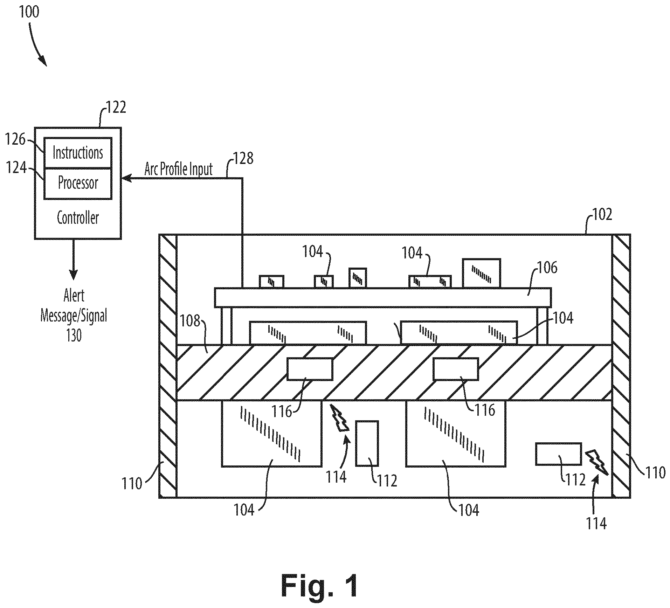

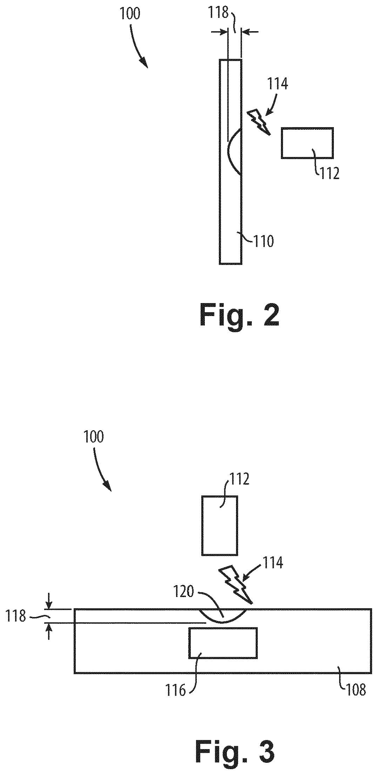

Reference will now be made to the drawings wherein like reference numerals identify similar structural features or aspects of the subject disclosure. For purposes of explanation and illustration, and not limitation, a partial view of an embodiment of a system in accordance with the disclosure is shown in Fig. 1 and is designated generally by reference character 100. Other embodiments of systems in accordance with the disclosure, or aspects thereof, are provided in Figs. 2-7, as will be described. The systems and methods described herein can be used to determine damage resulting from an electrical arc such as in power converters in aircraft.

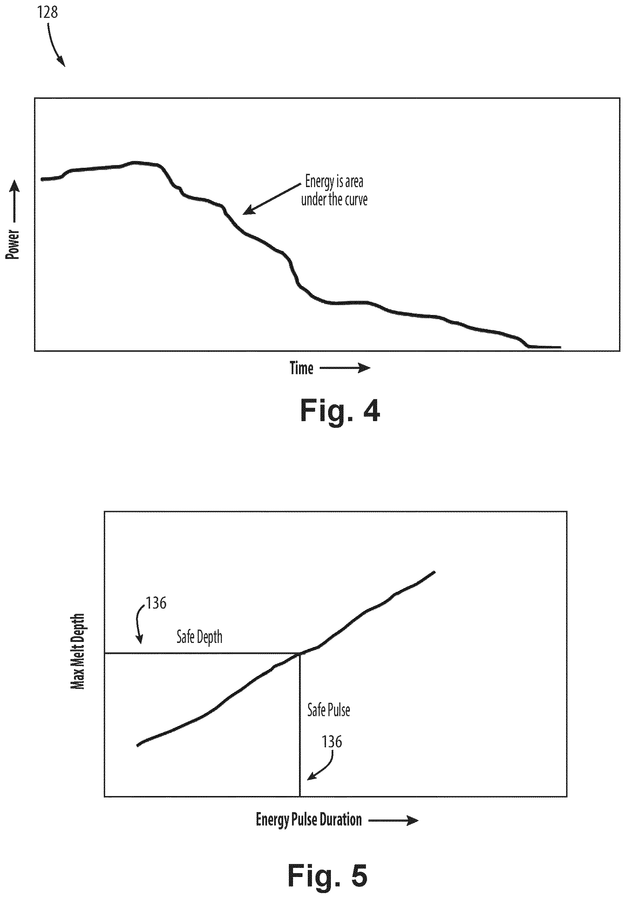

In this disclosure a system is disclosed for making a determination of whether an electrical arc has caused damage that could have resulted in melting of cold plate, any chassis wall, or the like. At first a high current is detected due to arc. The high current quickly drops. Energy from a generator can still feed the arc current for a time after the high current drops. Once the arc is detected, a trip command is issued and the system is tripped breaking the circuit to stop the arc. The arc detection and damage prediction system 100 computes the arc current profile and arc power, as shown and described below with respect to Fig. 4. Based on analytical models as shown and described below with reference to Figs. 5-7, the system 100 determines the possible damages of arc on chassis wall and chassis cold plate vulnerable locations assuming arc impinged at those locations. If the system 100 determines that the arc has potential to have damaged cold plate, coolant flow to the cold plate is stopped. In addition, system 100 issues an alert that the power converter be examined after the flight, e.g. by ground crew.

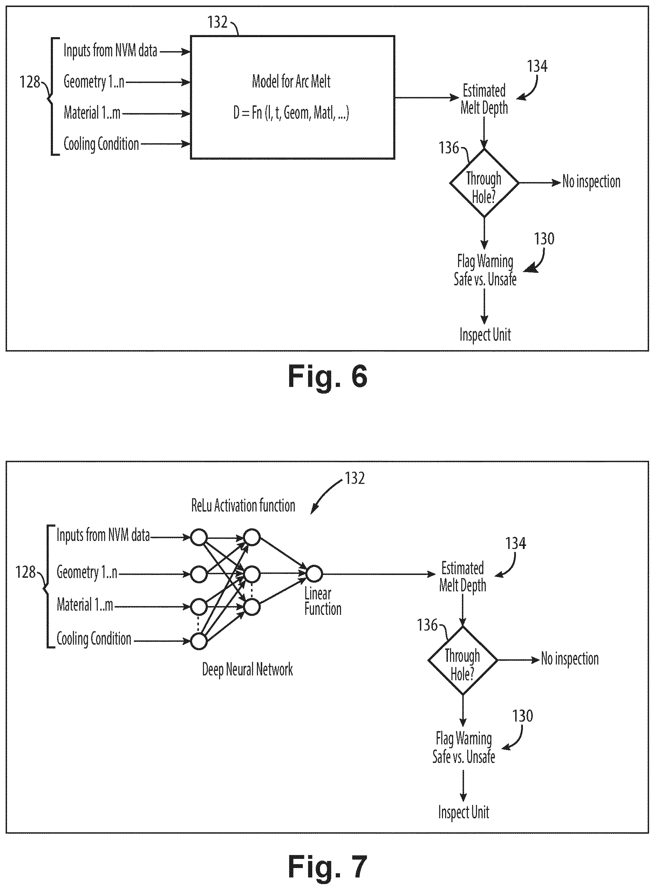

Heat transfer in melting is modeled using a thermal conduction model and simplified melting phenomena. Various materials could be tried for this evaluation, for model validation. Heat capacity can be used as function of temperature and updated value can be used near the melting point to capture very high heat capacity due to latent heat of melting for various materials. Transient simulations can be performed for various geometries, materials, and power (energy) conditions (power vs. time) and the maximum melt depth during the excursion/short/arc event can be evaluated. The melt front, shown in Figs. 2-3, can be tracked to see if it will cause a through hole for the external walls, near cooling channels, or the like. From this, the system 100 can determine a risk level. The model can simulate physical phenomena based on electrical (current, duration, and the like) and mechanical inputs (material, geometry, location of short, location of cooling channel, and the like), as shown and described below with respect to Fig. 6. In the case of a machine learning or artificial intelligence model, the model can be developed to predict the depth of melt for different operating conditions, as shown and described below with reference to Fig. 7. Based on thermo-physical simulation, the system 100 can predict a safe pulse and/or a safe depth based on maximum melt depth predicted.

With reference now to Fig. 1, the system 100 can include a line replaceable unit (LRU) 102 such as for power handling equipment aboard an aircraft, e.g. power converters receiving power from a generator, and delivering conditioned power to the aircraft electrical bus. The LRU can include power handling components 104, such as transistors, on a circuit board 106. A cold plate 108 spanning from the chassis walls 110 supports the board 106 and provides cooling to the components 104 on the board 106, as well as additional components 104 mounted directly to surface of the cold plate 108 that are operatively connected to the board 106. The cold plate 108 includes cooling channels 116.

Fig. 1 shows two pieces of foreign object debris (FOD) 112, which could give rise to electrical arcs 114, one electrical arc 114 potentially damaging the chassis wall 110, and one potentially damaging the cold plate 108. For the chassis wall 110, Fig. 2 shows a melt front 118 where the arc 114 melts into, and potentially through, the chassis wall 110. Similarly, Fig. 3 shows the melt front 118 proximate a thin portion 120 of the cold plate structure proximate a cooling channel 116.

With reference again to Fig. 1, the system includes a controller 122 operatively connected to receive electrical arc profile input 128 from the board 106 and/or components 104 (the input can also come from a power source such as a generator powering the components 104), for detecting electrical arc damage. The controller 122 includes a processor 124 operatively connected to machine readable instructions 126 configured to cause the processor 124 to perform methods as disclosed herein. The machine readable instructions 126 can include digital programming instructions, solid state digital logic circuitry, analog logic circuitry, and/or any other suitable form of machine readable instructions, and can be physically located inside the controller 122, or located in another component external to the controller 122 that is operatively connected to the processor 124.

A method of detecting electrical arc damage includes receiving input 128, e.g. from nonvolatile memory (NVM) data into the processor 124, indicative of electrical power as a function of time in an electrical arc 114. Fig. 4 shows a suitable input 128 in the form of power over time for the arc 114. Current over time can also be used, and converted to power over time. Power over time input allows a determination of energy, the integral of power over time or area under the curve as indicated in Fig. 4.

With reference now to Fig. 6, the method includes using the input 128 to model, e.g. using the regression model 132, an amount of damage caused by the electrical arc 114 in the form of an estimated melt depth of the melt front 118 of Figs. 2-3, and comparing the amount of damage to a predetermined threshold, e.g. a potential through hole as described above with reference to Figs. 2-3. The method includes flagging a warning or alert 130 in response to the amount of damage, based on melt depth 134 perpendicular to the surface where the arc impinged, exceeding a predetermined threshold 136. Flagging a warning can include outputting the warning, issuing a warning, displaying a warning, providing an audible output warning, or the like. Although the method can include breaking a circuit to stop the electrical arc 114 as described above, the method accounts for damage that potentially occurred during the short time between the beginning of the electrical arc and when it ended. Flagging the warning 130 can include signaling to an operator such as flight and/or ground crew, to inspect a unit, e.g. LRU 102 of Fig. 1, potentially damaged by the electrical arc 114. The method includes inspecting the unit, e.g. LRU 102 of Fig. 1, that was potentially damaged by the electrical arc 114, i.e. without the need for inspecting other like units that did not experience an electrical arc.

The regression model 132 can be based on validated configurations in a variety of operating conditions. Using the regression model 132 includes modeling transient heat transfer resulting from the electrical arc, e.g. as shown in Fig. 5, where predicted melt depth is shown over time, with predetermined thresholds 136 for safe depth and safe pulses. Comparing the amount of damage to a predetermined threshold can include comparing the estimated melt depth to a known wall thickness to determine if the estimated melt depth represents a potential through hole versus the known wall thickness. The model 132 can determine if the power or current profile (as shown in Fig. 4) is characteristic of an arc near a cooling channel 116, or near a chassis wall 110 (numbered in Fig. 1) or other wall, then use the known wall thickness at that location for modeling melt depth to determine if there is a through hole expected. The method includes indicating a safe condition 130 after the electrical arc in response to the amount of damage not exceeding a predetermined threshold. This way, the LRU 102 of Fig. 1 only needs to be inspected after an electrical arc event if the model 132 determines there is a likely melt depth to pose the need for inspection.

The input 128 for the model 132 can include input indicative of one or more geometries of a system of the electrical arc, wherein using the input to model the amount of damage includes modeling the amount of damage based on each of the one or more geometries to account for items in the system susceptible to arc damage such as the coolant channels 116 (labeled in Fig. 1). The input 128 can also include information indicative of one or more materials of a system of the electrical arc and/or a cooling condition of the system 100, and the model 132 can use these inputs for modeling the amount of damage based on each of the one or more materials and/or on the cooling condition. With reference to Fig. 7, it is also contemplated that the model can be a machine learning (ML) or artificial intelligence (AI) model, e.g., using a deep neural network model developed with validated configurations in a variety of operating conditions, or trained with a regression model. The ML or AI model can use the same inputs 128 and can provide the same outputs 130 as the regression model 132 of Fig. 6.

A deep neural network has at least one or more hidden layers implemented to find relationships between the wide variety and range of inputs (such as location, geometry, current, and the like) and use different (non-linear and linear) activation functions (especially ReLU i.e. rectified linear unit on input and hidden layers and linear activation function on the output side i.e. melt depth estimation). A deep neural network with multiple hidden layers helps in improving the model performance by creating intermediate features/relations. In contrast, regression is simple/complex mathematical equation between output (melt depth) and inputs (geometry, current, and the like).

Systems and methods as disclosed herein provide potential benefits including the following. The methods can make use of validated thermo-physical models. Either a regular regression based model or neural network-based models can be used to predict melt depth. The system can process impact of an electrical arc and its energy a-priori and warn of the danger if any to the system and avoid damage to the system. The method can be also used in design validation phase of the program to verify the models under different conditions. As future high power electrical systems will have higher power density, these types of methods can enhance the availability of the system by flagging safety related warnings to the system console.

The methods and systems of the present disclosure, as described above and shown in the drawings, provide for determine damage resulting from an electrical arc such as in power converters in aircraft. While the apparatus and methods of the subject disclosure have been shown and described with reference to preferred embodiments, those skilled in the art will readily appreciate that changes and/or modifications may be made thereto without departing from the scope of the subject disclosure.

## Claims

1. A method of detecting electrical arc damage comprising:
receiving input (128) indicative of electrical power as a function of time in an electrical arc (114);
using the input (128) to model an amount of damage caused by the electrical arc (114);
comparing the amount of damage to a predetermined threshold; and
flagging a warning in response to the amount of damage exceeding a predetermined threshold.

2. The method as recited in claim 1, wherein using the input (128) to model the amount of damage includes using a regression model (132) based on validated configurations in a variety of operating conditions.

3. The method as recited in claim 2, wherein using the regression model (132) includes modeling transient heat transfer resulting from the electrical arc (114).

4. The method as recited in any preceding claim, wherein using the input (128) to model the amount of damage includes using a machine learning model.

5. The method as recited in claim 4, wherein the machine learning model includes a deep neural network model.

6. The method as recited in any preceding claim, wherein the input (128) indicative of electrical power as a function of time includes electrical current over time during the electrical arc (114).

7. The method as recited in any preceding claim, further comprising:
receiving input (128) indicative of one or more geometries of a system of the electrical arc (114), wherein using the input (128) to model the amount of damage includes modeling the amount of damage based on each of the one or more geometries; and/or
receiving input (128) indicative of one or more materials of a system of the electrical arc (114), wherein using the input (128) to model the amount of damage includes modeling the amount of damage based on each of the one or more materials; and/or
receiving input (128) indicative of a cooling condition of a system of the electrical arc (114), wherein using the input (128) to model the amount of damage includes modeling the amount of damage based on the cooling condition.

8. The method as recited in any preceding claim, wherein using the input (128) to model the amount of damage includes determining an estimated melt depth resulting from the electrical arc (114).

9. The method as recited in any preceding claim, wherein comparing the amount of damage to a predetermined threshold includes comparing the estimated melt depth to a known wall thickness to determine if the estimated melt depth represents a potential through hole versus the known wall thickness.

10. The method as recited in any preceding claim, further comprising indicating a safe condition after the electrical arc (114) in response to the amount of damage not exceeding a predetermined threshold.

11. The method as recited in any preceding claim, wherein flagging the warning includes signaling to an operator to inspect a unit potentially damaged by the electrical arc (114), and optionally further comprising inspecting the unit potentially damaged by the electrical arc (114).

12. The method as recited in any preceding claim, further comprising breaking a circuit to stop the electrical arc (114).

13. A system for detecting electrical arc damage comprising:
a processor operatively connected to machine readable instructions configured to cause the processor to:
receive input (128) indicative of electrical power as a function of time in an electrical arc (114) in a line replaceable unit, LRU, aboard an aircraft;
use the input (128) to model an amount of damage caused by the electrical arc (114);
compare the amount of damage to a predetermined threshold; and
flag a warning in response to the amount of damage exceeding a predetermined threshold.

14. The system as recited in claim 13, wherein using the input (128) to model the amount of damage includes using a regression model (132) based on validated configurations in a variety of operating conditions, and optionally wherein using the regression model (132) includes modeling transient heat transfer resulting from the electrical arc (114).

15. The system as recited in claim 13 or 14, wherein using the input (128) to model the amount of damage includes using a machine learning model, and optionally wherein in the machine learning model includes a deep neural network model.
